# EUROPEAN PATENT APPLICATION

(11) **EP 4 579 830 A1**
(43) Date of publication of application: **02.07.2025**
(21) Application number: 23883101.0
(22) Date of filing: 25.10.2023
(51) Int. Cl.: H01M 10/04, H01M 50/105, H01M 50/186

(54) **METHOD FOR MANUFACTURING SECONDARY BATTERY**

(30) Priority: 25.10.2022 KR 20220138752
(71) Applicant: LG Energy Solution, Ltd., Seoul 07335 (KR)
(72) Inventor: KIM, Won Nyeon, Daejeon 34122 (KR); JU, Yong Kyu, Daejeon 34122 (KR); SUNG, Sang Hoon, Daejeon 34122 (KR); JO, Han Nah, Daejeon 34122 (KR)
(74) Representative: Goddar, Heinz J.
(86) International application number: PCT/KR2023/016676
(87) International publication number: WO 2024/090996

(57) **Abstract**

The present invention relates to a method for manufacturing a secondary battery, which includes a process of preparing a pouch case provided with an accommodation part, in which an electrode assembly is accommodated, and a collection part which communicates with the accommodation part and in which a gas generated during a charging/discharging process for activation is collected, a process of forming an opening in the collection part to discharge the gas collected in the collection part, a process of pressing at least a portion of edges of the pouch case to the outside of the pouch case, and a process of forming a main sealing part for separating and sealing the accommodation part from the collection part between the accommodation part and the collection part after pressing the pouch case or in the state of pressing the pouch case.

## Description

### TECHNICALFIELD

### CROSS-REFERENCE TO RELATED APPLICATION

The present application claims the benefit of the priority of Korean Patent Application 10-2022-0138752, filed on October 25, 2022, which is hereby incorporated by reference in its entirety.

### TECHNICAL FIELD

The present invention relates to a method for manufacturing a secondary battery.

### BACKGROUND ART

In general, secondary batteries are chargeable and dischargeable unlike primary batteries that are not chargeable and are widely used in electronic devices such as mobile phones, notebook computers, camcorders, and the like, electric vehicles, or the like. Particularly, since lithium secondary batteries have larger capacities than nickel-cadmium batteries or nickel-hydrogen batteries and high energy densities, their utilization has rapidly increased.

Secondary batteries may be classified into cylindrical batteries or prismatic batteries in which an electrode assembly 2 is built in a cylindrical or prismatic metal can and pouch-type batteries in which an electrode assembly 2 is built in a pouch-type case provided as a lamination sheet.

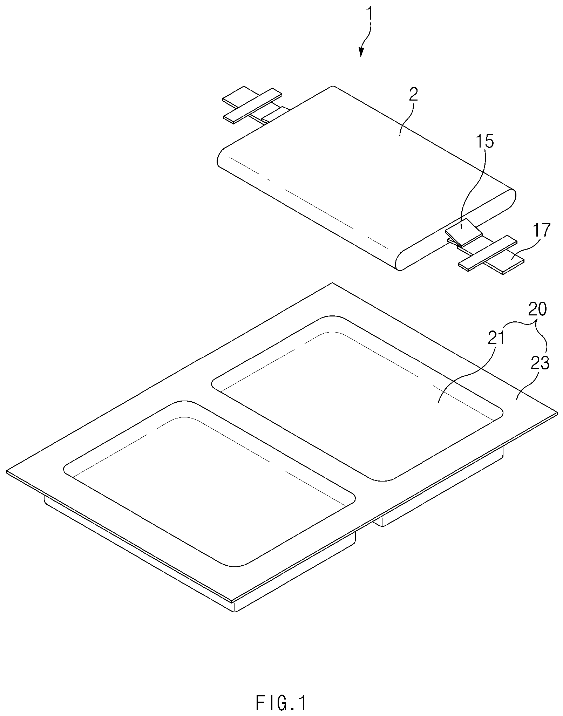

FIG. 1 is a view illustrates an example of a pouch-type secondary battery. A pouch-type secondary battery 1 includes an electrode assembly 2, in which electrodes and separators are alternately stacked, and a pouch-type exterior 20 into which the electrode assembly 2 is accommodated. Electrode tabs 15 may be connected to the electrodes of the electrode assembly, respectively. The electrode tabs 15 may be welded to each other on a predetermined area and then connected to an electrode lead 17 through welding. The exterior 20 may include a receiving part 21 for accommodating the electrode assembly 2. The receiving part 21 of the exterior 20 may be provided by one or two recessed portions. FIG. 1 illustrates an example of a receiving part 21 provided by two recessed portions. A sealing part (terrace) 23 may be disposed around a circumference of the receiving part 21 by thermal fusion.

In a pouch-type secondary battery, a pouch-type exterior 20 of FIG. 1 may be manufactured from a pouch case that includes an accommodation part, in which an electrode assembly is accommodated, and a collection part in which a gas generated during a charging/discharging process for activation is collected. The secondary batteries require the charge/discharge process for the activation. The gas may be generated during this process, and the generated gas may be collected in the collection part. The gas collected in the collection part may be discharged to the outside of the pouch case through a degassing process. After the degassing process, a sealing part may be provided between the accommodation part and the collection part to separate and seal the accommodation part from the collection part, and the collection part may be separated from the accommodation part. Through this process, the pouch-type exterior 20 of FIG. 1 may be provided.

However, due to flexible properties of the pouch case, wrinkles are likely to be generated on the pouch case during the preparation of the pouch case or during the degassing process. If the sealing part is provided in the state in which the wrinkles are generated, sealing strength of the sealing part may be weakened. If the sealing strength is weakened, high-temperature storage performance and long-term life performance of the secondary battery may be weakened.

### DISCLOSURE OF THE INVENTION

### TECHNICAL PROBLEM

An object of the present invention is to provide a method for manufacturing a secondary battery, which does not cause weakening of sealing strength due to wrinkles.

### TECHNICAL SOLUTION

In an embodiment, a method for manufacturing a secondary battery includes a process (a) of preparing a pouch case provided with an accommodation part, in which an electrode assembly is accommodated, and a collection part which communicates with the accommodation part and in which a gas generated during a charging/discharging process for activation is collected, a process (b) of forming an opening in the collection part to discharge the gas collected in the collection part, a process (c) of pressing at least a portion of edges of the pouch case to the outside of the pouch case, and a process (d) of forming a main sealing part for separating and sealing the accommodation part from the collection part between the accommodation part and the collection part after pressing the pouch case or in the state of pressing the pouch case.

In another embodiment, the process (c) may include a process of pressing at least a portion of the edges of the pouch case outward from the inside of the pouch case.

In further another embodiment, the process (c) may include a process of pressing two edge of the edges of the pouch case, which pass through both ends of a main sealing part in a direction crossing the main sealing part to the outside of the pouch case in a direction in which the main sealing part is to be formed when the main sealing part is formed.

In further another embodiment, the pouch case may include a first edge extending in a predetermined direction and disposed adjacent to the collection part, second and third edges respectively extending from both ends of the first edge and disposed to face each other, and a fourth edge connecting the second and third edges to each other, disposed to face the first edge, and disposed adjacent to the accommodation part.

In further another embodiment, the process (b) may include a process of removing at least a portion of the first sealing part formed along the first edge to form the opening.

In further another embodiment, the process (c) may include a process of inserting a pair of pressing rods into the pouch case through the opening, and a process of allowing the pressing rods to move in a direction away from each other so that the second and third edges of the pouch case are pressed to the outside of the pouch case.

In further another embodiment, the pressing rods may be inserted in a direction toward the electrode assembly until inner ends of the pressing rods facing the electrode assembly are disposed adjacent to a position at which the main sealing part is to be formed.

In further another embodiment, the pressing rods may not be inserted into the pouch case beyond the position at which the main sealing part is to be formed.

In further another embodiment, the pressing rods may be inserted into the pouch case and disposed respectively parallel to the second and third edges.

In further another embodiment, the pressing rods may move toward the second and third edges so as to be in at least linear contact with inner portions of the pouch case corresponding to the second and third edges in the state in which the pressing rods are disposed parallel to the second and third edges, respectively.

In further another embodiment, each of the pressing rods may include a portion that gradually becomes thinner toward a lateral end facing the second or third edge, which is to be pressed by the pressing rod, so that a thickness thereof is the thinnest at the lateral end.

In further another embodiment, each of the pressing rods may include a portion that gradually becomes thinner toward an inner end facing the electrode assembly so that a thickness thereof is the thinnest at the inner end.

In further another embodiment, the method may further include a process of cutting the collection part outside the main sealing part along the main sealing part.

In further another embodiment, the collection part may be cut in the state of pressing the pouch case.

### ADVANTAGEOUS EFFECTS

According to the present invention, since the main sealing part is formed in a state in which the wrinkles are removed or a state in which the generation of the wrinkles is prevented, secondary batteries which do not cause weakening of the sealing strength due to the wrinkles may be manufactured.

### BRIEF DESCRIPTION OF THE DRAWINGS

FIG. 1 is a view illustrates an example of a pouch-type secondary battery.
FIGS. 2 to 4 are views for explaining a degassing process according to a related art.
FIGS. 5 to 9 are views for explaining a method for manufacturing a secondary battery according to Embodiment 1 of the present invention.
FIG. 10 is a view for explaining a method for manufacturing a secondary battery according to Embodiment 2 of the present invention.
FIG. 11 is a perspective view illustrating a pressing rod applied to the manufacturing method of FIG. 10.
FIG. 12 is a cross-sectional view of the pressing rod of FIG. 11, taken along line A-A.
FIG. 13 is a cross-sectional view of the pressing rod of FIG. 11, taken along line B-B.

### MODE FOR CARRYING OUT THE INVENTION

Hereinafter, preferred embodiments of the present invention will be described in detail with reference to the accompanying drawings so that those of ordinary skill in the art may easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

A pouch-type secondary battery may be manufactured through the following processes.

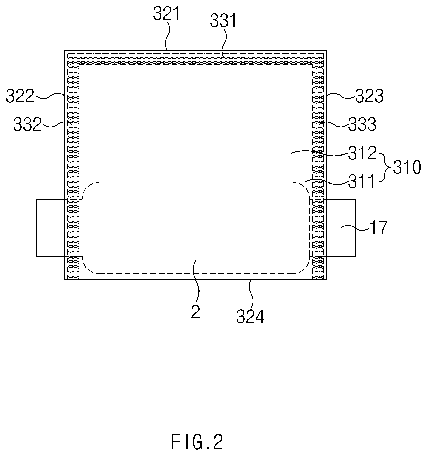

First, an electrode assembly 2 may be prepared and then accommodated in a pouch case 310 (see FIG. 2). The pouch case 310 may be prepared by coupling two pouches, which are disposed to face each other, in the state in which the electrode assembly 2 is accommodated. The two pouches may be coupled to each other in a state of being prepared separately. Three edges of four edges of the two pouches may be sealed and coupled by thermal fusion. A sealing part may be provided through the above-described sealing. An opening for electrolyte injection may be defined through one edge that is not at least partially sealed. Alternatively, the pouch case 310 may be prepared by folding one pouch (see FIG. 1). The folded portion of one pouch may not be sealed. For reference, FIG. 2 illustrates the pouch case 310 that has been sealed after injection of an electrolyte, which will be described later. For example, the sealing part 331 may not be provided on an edge 321 of FIG. 2, and thus, the electrolyte may be injected, and then, the sealing part 331 may be provided on the edge 321 after the injection of the electrolyte.

Next, the electrolyte may be injected into the pouch case 310 through the non-sealed edge of the pouch case 310. The electrode assembly 2 may be impregnated with the injected electrolyte.

Next, the edges of the pouch case 310, which are not sealed, may be sealed. As a result, the pouch case 310 may be completely sealed.

Next, the battery may be charged and discharged for activation. The charging and discharging may occur several times, and a gas may be generated during this process.

Next, a degassing process may be performed to remove the gas generated during the charging and discharging process. Hereinafter, this will be described in detail with reference to FIGS. 2 to 4. FIGS. 2 to 4 are views for explaining a degassing process according to a related art.

The pouch case 310 including an accommodation part 311 and a collection part 312 may be prepared through the above-described processes (see FIG. 2). An inner space of the pouch case 310 may be divided into a space for accommodating the electrode assembly 2 and a space for collecting the gas. The former may be the accommodation part 311, and the latter may be the collection part 312. The electrode assembly 2 may be accommodated in the accommodation part 311. For this, a receiving part 21 (see FIG. 1) for receiving the electrode assembly 2 may be formed in the accommodation part 311. The collection part 312 may be a partial space within the pouch case 310, which communicates with the accommodation part 311, and may be a space for collecting the gas generated during the charging and discharging process for the activation.

FIG. 2 illustrates an example of the pouch case 310 provided by folding one pouch. Except for a folded portion 324 of the pouch case 310 in FIG. 2, sealing parts 331 to 333 may be provided on remaining edges 321 to 323, respectively. For reference, an electrode lead 17 electrically connected to the electrode assembly 2 may extend from both ends in a longitudinal direction of the electrode assembly 2 to protrude to the outside of the pouch case 310, as illustrated in FIG. 2.

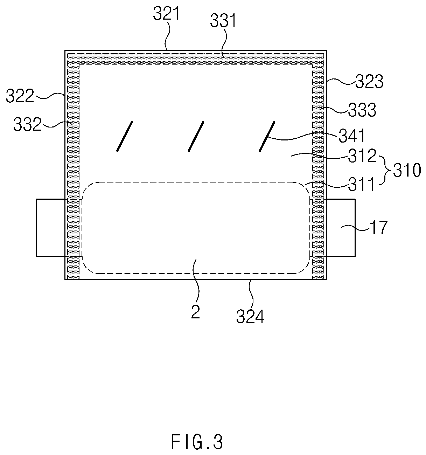

When the pouch case 310 is prepared, a line-shaped gap 341 may be formed in the collection part 312 of the pouch case 310 (see FIG. 3). For this, a knife may be used. When the gap 341 is formed, the gas collected in the collection part 312 may be discharged to the outside of the pouch case 310 through the gap 341. To promote the discharge of the gas, the pouch case 310 may be placed under a vacuum atmosphere.

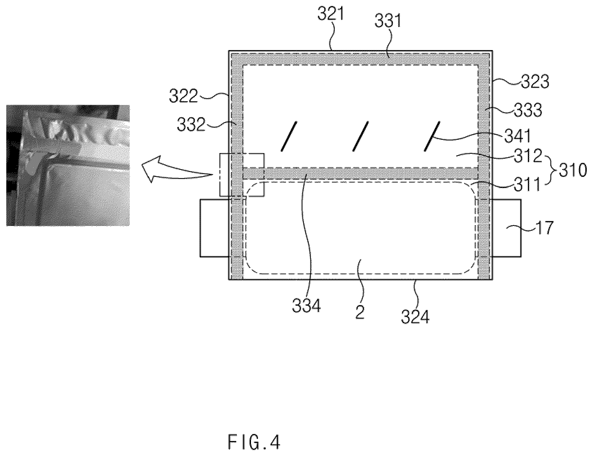

When the gas is completely discharged, a main sealing part 334 may be formed between the accommodation part 311 and the collection part 312 (see FIG. 4). The main sealing part 334 may be a portion for separating and sealing the accommodation part 311 from the collection part 312 and may be formed by thermal fusion in the same manner as that for forming other sealing parts 331 to 333.

However, due to flexible properties of the pouch case 310, wrinkles (swells) may be easily formed on the pouch case 310. For example, the wrinkles may be formed while preparing the pouch case 310 or while discharging the gas through the gap 341.

In general, the pouch case 310 may be manufactured from a pouch film including a metal layer made of a metal (e.g., aluminum), an inner resin layer (e.g. layer made of polypropylene) disposed inside a metal layer, and an outer resin layer (e.g., layer made of polyethylene terephthalate) disposed outside the metal layer, and when the main sealing part 334 is formed in a state in which the wrinkles are formed, stress may be concentrated to the inner resin layer of the pouch case 310, and thus, the inner resin layer may melt more easily. This may weaken sealing strength of the sealing part 334. If the sealing strength of the sealing part is weakened, the sealing part may unintentionally fall apart when a high temperature occurs or during long-term use. As a result, if the main sealing part 334 is formed in the state in which the wrinkles are formed, the high-temperature storage performance and long-term life performance of the secondary battery may be weakened.

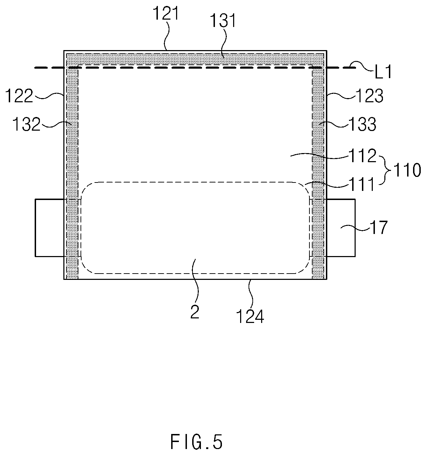

A method for manufacturing a secondary battery according to Embodiment 1, which will be described below, is characterized in that the main sealing part is formed in the state in which the wrinkles (swells) are removed (or the occurrence of the wrinkles is prevented) in order to solve the above problem. Hereinafter, the method of manufacturing the secondary battery according to Embodiment 1 will be described with reference to FIGS. 5 to 9.

### Embodiment 1

FIGS. 5 to 9 are views for explaining the method for manufacturing the secondary battery according to Embodiment 1 of the present invention.

First, as illustrated in FIG. 5, a pouch case 110 provided with an accommodation part 111 in which the electrode assembly 2 is accommodated and a collection part 112 in which a gas generated during a charging/discharging process for activation is collected may be prepared. The pouch case 110 of FIG. 5 may be the same as the pouch case 110 of FIG. 2 described above.

The pouch case 110 may include four edges 121 to 124 as illustrated in FIG. 5. The first edge 121 may be an edge of the pouch case 110, which extends in a predetermined direction (e.g., left and right direction in FIG. 5) and is disposed adjacent to the collection part 112. The second and third edges 122 and 123 may be edges of the pouch case 110, which respectively extend from both ends of the first edge 121 and are disposed to face each other. The fourth edge 124 may be an edge that connects the second and third edges 122 and 123 to each other, and is disposed to face the first edge 121, and is disposed adjacent to the accommodation part 111.

First to third sealing parts 131, 132, and 133 formed by thermal fusion may be provided on the first to third edges 121, 122, and 123 of the pouch case 110, respectively. As described above, the fourth edge 124 of the pouch case 110 may be a portion at which one pouch is folded, and the sealing part may not be provided on the fourth edge 124.

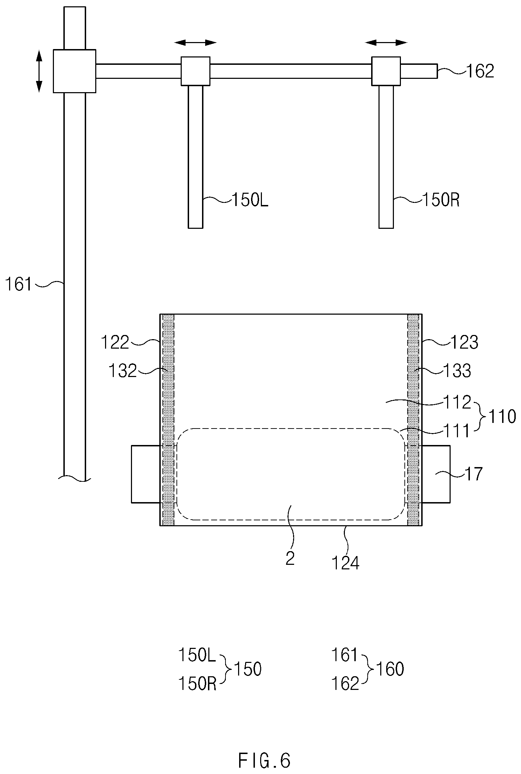

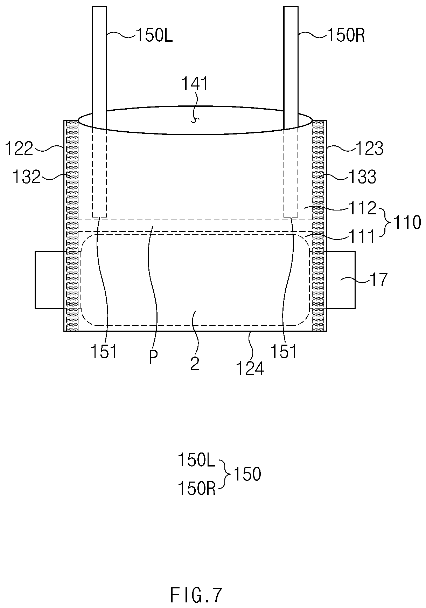

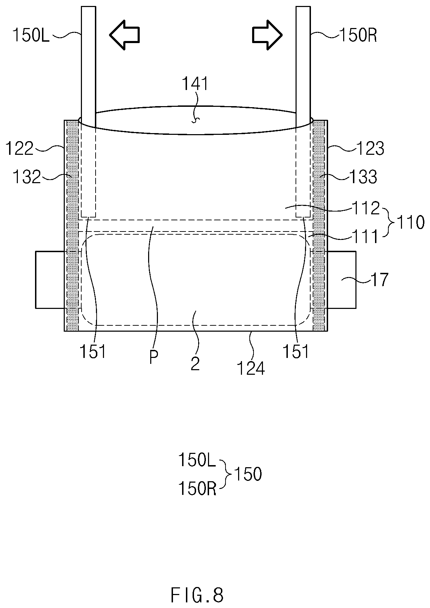

Next, an opening 141 (see FIG. 7) may be formed in the collection part 112 to discharge the gas collected in the collection part 112. The opening 141 of the collection part 112 may be formed by removing at least a portion of the first sealing part 131 formed along the first edge 121. For example, the pouch case 110 may be cut along a cutting line L1 of FIG. 5 inside the first sealing part 131 to form the opening 141. When considering movement of pressing rods 150 (see FIG. 8), which will be described later, the entire first sealing part 131 may be removed. After this process, the pouch case 110 may have a shape as illustrated in FIG. 6.

To promote the discharge of the gas, the pouch case 110 may be placed under a vacuum atmosphere. For example, the pouch case 110 may be placed in a vacuum chamber capable of forming a vacuum. The pressing to the edges of the pouch case 110 may be applied even while maintaining the vacuum. This will be described later.

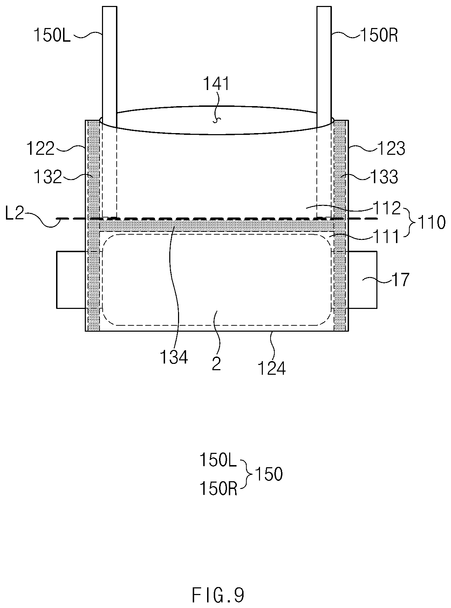

Next, at least a portion of the edges of the pouch case 110 may be pressed to the outside of the pouch case 110. Due to this pressing, wrinkles formed on the pouch case 110 may be removed. If the pressing is applied during the formation process of the main sealing part 134 (see FIG. 9), which will be described later, the wrinkles may be prevented from occurring during the forming process of the main sealing part 134.

Hereinafter, the pressing process will be described in detail with reference to FIGS. 6 to 8.

In this embodiment, the pressing to the pouch case 110 may be implemented by pressing the rods 150. The pressing rods 150 of this embodiment may move in a vertical direction and a left and right direction in FIG. 6 to press the pouch case 110. This movement may be implemented by a driving part 160 of FIG. 6. The driving part 160 may include a support part 161 and a movable part 162 that moves in the vertical direction with respect to the support part 161. The pressing rods 150 may be coupled to the movable part 162 to be movable in the left and right directions. When the pressing rods 150 are required to move vertically (e.g., when the pressing rods are inserted into the pouch case through the opening), the movable part 162 may move in the vertical direction along the support part 161. When the left and right movement of the pressing rods 150 is required (e.g., when pressing the edges of the pouch case outward through the pressing rods), the pressing rods 150 may move in the left and right direction along the movable part 162.

First, as illustrated in FIG. 7, a pair of pressing rods 150 may be inserted into the pouch case 110 through the opening 141 of the pouch case 110, which is formed by removing the first sealing part 131.

The pressing rods 150 may be inserted in a direction (e.g., downward direction in FIG. 7) toward the electrode assembly 2 until inner ends 151 of the pressing rods 150 facing the electrode assembly 2 are disposed adjacent to a position P at which the main sealing part 134 (see FIG. 9) is to be formed. Here, the pressing rods 150 may not be inserted into the pouch case 110 beyond the position P at which the main sealing part 134 is to be formed. For example, the pressing rods 150 may be inserted only to a position that does not overlap the position P at which the main sealing part 134 is to be formed. The formation process of the main sealing part 134, which will be described later, may be performed while the pressing by the pressing rods 150 is maintained, and this is done for a reason in which the pressing rods 150 do not interfere with the formation process of the main sealing part 134.

Next, as illustrated in FIG. 8, the pressing rods 150 may move in a direction that is away from each other (e.g., see an arrow direction in FIG. 8) to press the second and third edges 122 and 123 of the pouch case 110 to the outside of the pouch case 110, respectively. Due to this pressing, wrinkles formed on the pouch case 110 may be removed. If the pressing is applied during the formation process of the main sealing part 134 (see FIG. 9), which will be described later, the wrinkles may be prevented from occurring during the forming process of the main sealing part 134. In the case of this embodiment, many portions of the second and third edges 122 and 123 may be directly pressed using the pressing rods 150, and thus, it may be very effective in removing the wrinkles or preventing the wrinkles from occurring.

The second and third edges 122 and 123 of the edges of the pouch case 110 may be two edges that pass through both ends of the main sealing part 134 in a direction (e.g., vertical direction in FIG. 8) crossing the main sealing part 134 when the main sealing part 134 (see FIG. 9; see the position P at which the main sealing part of FIG. 8 is to be formed) is formed. The second and third edges 122 and 123 may be pressed to the outside of the pouch case 110 in the direction (e.g., left and right direction in FIG. 8) in which the main sealing part 134 is to be formed. The wrinkles may be formed on the pouch case 110 in the direction in which the main sealing part 134 is formed, as illustrated in the partially enlarged view of FIG. 4, and thus, when pressing the edge of the pouch case 110 in the above-described direction, the wrinkles may be effective removed.

As illustrated in FIG. 7, the pressing rods 150 may be inserted into the pouch case 110 and disposed parallel to the second and third edges 122 and 123, respectively. For example, in the pressing rods 150, a left pressing rod 150L may be disposed parallel to the second edge 122, and a right pressing rod 150R may be disposed parallel to the third edge 123. Here, in the state in which the pressing rods 150 are disposed in parallel to the second and third edges 122 and 123, respectively, as illustrated in FIG. 8, the pressing rods 150 may move toward the second and third edges 122 and 123 so as to be in linear contact with an inner portion of the pouch case 110 corresponding to the second and third edges 122 and 123.

For example, when a left end of the left pressing rod 150L is formed sharply, the left end of the left pressing rod 150L may be in linear contact with the inner portion of the pouch case 110 on which the second sealing part 132 is formed. When the left end of the left pressing rod 150L is formed in an arc shape, the left end of the left pressing rod 150L may be in surface contact with the inner portion of the pouch case 110. As described above, the pressing rods 150 of this embodiment may be in contact with the inner portion of the pouch case 110 in as wide a range as possible. This may be very effective in removing the wrinkles or preventing the wrinkles from occurring.

After the pouch case 110 is pressed, as illustrated in FIG. 9, the main sealing part 134 may be formed between the accommodation part 111 and the collection part 112 to separate and seal the accommodation part 111 from the collection part 112. The main sealing part 134 may be formed by thermal fusion. If the main sealing part 134 is formed while the pressing to the pouch case 110 is maintained, the wrinkles may be prevented from occurring during the formation process of the main sealing part 134.

Next, the collection part 112 may be cut at the outside of the main sealing part 134 along the main sealing part 134. For example, the pouch case 110 may be cut along L2 in FIG. 9 to remove the collection part 112. As a result, the pouch-type secondary battery may be manufactured. Even during such the cutting, the pressing by the pressing rod 150 may be applied. If the pouch case 110 is cut in the state in which the second and third edges 122 and 123 of the pouch case 110 are supported by the pressing rods 150, the cutting process may be stable.

The pressing by the pressing rods 150 may be applied even during the discharge of the collected gas. For example, if the pressing as in FIG. 8 is applied even during the gas discharge, the phenomenon in which the second and third edges 122 and 123 of the pouch case 110 are curled inward during the gas discharge to generate the wrinkles on the pouch case 110 may be prevented from occurring. In order to promote the gas discharge, the gas discharge may be performed under a vacuum atmosphere, and in the vacuum atmosphere, the curling of the second and third edges 122 and 123 may be more severe. However, if the pressing rods 150 support the second and third edges 122 and 123, the above curling may be prevented.

### Embodiment 2

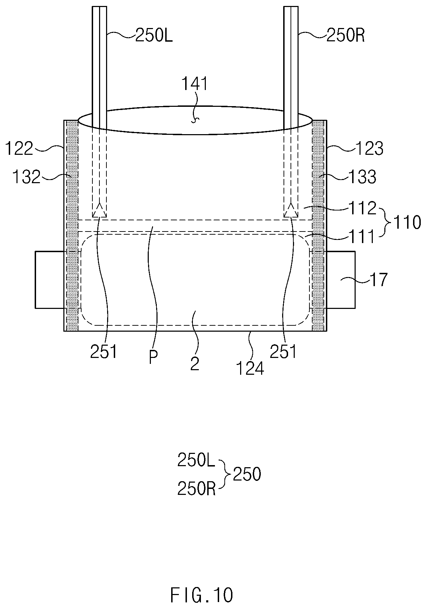

FIG. 10 is a view for explaining a method for manufacturing a secondary battery according to Embodiment 2 of the present invention. A manufacturing method of Embodiment 2 is different from the manufacturing method of Embodiment 1 as it relates to a structure of a pressing rod. Hereinafter, the manufacturing method of Embodiment 2 will be described focusing on these points.

The contents described with reference to FIGS. 5 to 9 may be equally applied to the manufacturing method of Embodiment 2. However, as illustrated in FIG. 10, the structure of the pressing rod 250 used to press a pouch case 110 in the present embodiment is different from the above-described contents.

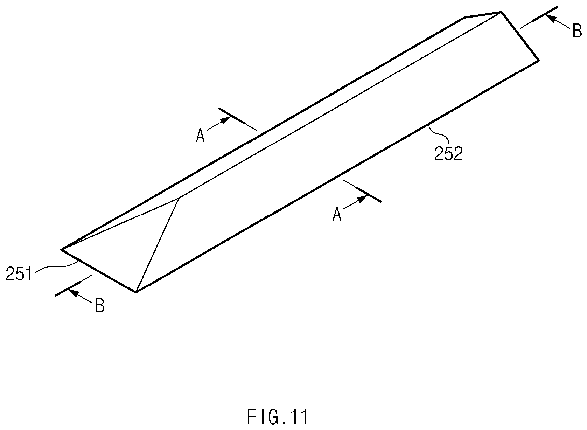

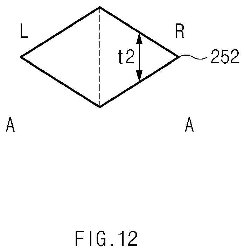

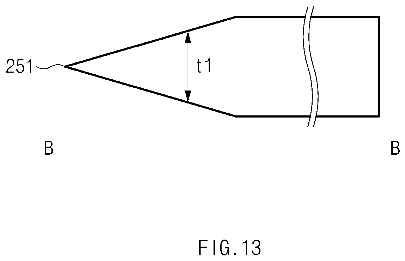

The pressing rod of this embodiments will be described with reference to FIGS. 11 to 13. FIG. 11 is a perspective view illustrating the pressing rod applied to the manufacturing method of FIG. 10, FIG. 12 is a cross-sectional view of the pressing rod of FIG. 11, taken along line A-A, and FIG. 13 is a cross-sectional view of the pressing rod of FIG. 11, taken along line B-B. For reference, the pressing rod in FIG. 11 is illustrated as a right pressing rod 250R of the pressing rods 250 in FIG. 10.

The pressing rod 250 of this embodiment may include a portion that gradually becomes thinner toward an end of a lateral end facing second or third edges 122 and 123 of the pouch case 110, which will be pressed by the pressing rod so that a thickness thereof is the thinnest at the lateral end. For example, a right pressing rod 250R of FIG. 10 may include a lateral end 252 facing the third edge 123 as illustrated in FIG. 11, and as illustrated in FIG. 12, a thickness t2 may gradually become thinner toward the lateral end 252, and thus, the thickness t2 may be the thinnest at the lateral end 252.

Since the edge of the pouch case 110 is attached, a space into which the pressing rod 250 is inserted may become narrow when approaching the edge within the pouch case 110. If the pressing rod 250 includes the portion of which the thickness gradually becomes thinner as described above, the insertion of the pressing rod 250 may be facilitated even in the narrow space.

In FIG. 12, the right half of the right pressing rod 250R is illustrated in a shape of which the overall thickness is thinner, but the shape of the right pressing rod 250R is not limited thereto. For example, the thickness may be thinner only at a portion adjacent to the lateral end 252 of a right half of the right pressing rod 250R. In FIG. 12 , the left half of the right pressing rod 250R is illustrated in a symmetrical shape of the right half, but the shape of the left half is not limited thereto. For example, the left half may have a rectangular cross-section. However, if the left half is formed in the shape that is symmetrical to the right half, a single-shaped pressing rod may be used as the left and right pressing rods.

The pressing rod 250 of this embodiment may include a portion that gradually becomes thinner toward the inner end 251 facing the electrode assembly 2 and has the thinnest thickness at the inner end 251. For example, the pressing rod 250 of FIG. 10 may include the inner end 251 facing the electrode assembly 2 as illustrated in FIG. 11, and as illustrated in FIG. 13, a thickness t1 may gradually become thinner toward the inner end 251, and thus, the thickness t1 may be the thinnest at the inner end 251. As illustrated in FIG. 10, the inner end 251 of the pressing rod 250 may be first inserted into the opening 141. As the thickness gradually becomes thinner toward the inner end 251, the pressing rod 250 may be easily inserted into the opening 141.

The above-disclosed subject matter is to be considered illustrative, and not restrictive, and the appended claims are intended to cover all such modifications, enhancements, and other embodiments, which fall within the true spirit and scope of the present invention.

Thus, the embodiment of the present invention is to be considered illustrative, and not restrictive, and the technical spirit of the present invention is not limited to the foregoing embodiment.

Therefore, the scope of the present invention is defined not by the detailed description of the invention but by the appended claims, and all differences within the scope will be construed as being comprised in the present invention.

## Claims

1. A method for manufacturing a secondary battery, the method comprising:
a process (a) of preparing a pouch case provided with an accommodation part, in which an electrode assembly is accommodated, and a collection part which communicates with the accommodation part and in which a gas generated during a charging/discharging process for activation is collected;
a process (b) of forming an opening in the collection part to discharge the gas collected in the collection part;
a process (c) of pressing at least a portion of edges of the pouch case towards an outside of the pouch case; and
a process (d) of forming a main sealing part for separating and sealing the accommodation part from the collection part between the accommodation part and the collection part after pressing the pouch case or in the state of pressing the pouch case.

2. The method of claim 1, wherein the process (c) comprises a process of pressing at least a portion of the edges of the pouch case outward from an inside of the pouch case.

3. The method of claim 1, wherein the process (c) comprises a process of pressing two edge of the edges of the pouch case, which pass through both ends of a main sealing part in a direction crossing the main sealing part to the outside of the pouch case in a direction in which the main sealing part is to be formed when the main sealing part is formed.

4. The method of claim 1, wherein the pouch case comprises:
a first edge extending in a predetermined direction and disposed adjacent to the collection part;
second and third edges respectively extending from both ends of the first edge and disposed to face each other; and
a fourth edge connecting the second and third edges to each other, disposed to face the first edge, and disposed adjacent to the accommodation part.

5. The method of claim 4, wherein the process (b) comprises a process of removing at least a portion of a first sealing part formed along the first edge to form the opening.

6. The method of claim 4, wherein the process (c) comprises:
a process of inserting a pair of pressing rods into the pouch case through the opening; and
a process of allowing the pressing rods to move in a direction away from each other so that the second and third edges of the pouch case are pressed to the outside of the pouch case.

7. The method of claim 6, wherein the pressing rods are inserted in a direction toward the electrode assembly until inner ends of the pressing rods facing the electrode assembly are disposed adjacent to a position at which the main sealing part is to be formed.

8. The method of claim 7, wherein the pressing rods are not inserted into the pouch case beyond the position at which the main sealing part is to be formed.

9. The method of claim 6, wherein the pressing rods are inserted into the pouch case and disposed respectively parallel to the second and third edges.

10. The method of claim 9, wherein the pressing rods move toward the second and third edges so as to be in at least linear contact with inner portions of the pouch case corresponding to the second and third edges in the state in which the pressing rods are disposed parallel to the second and third edges, respectively.

11. The method of claim 6, wherein each of the pressing rods comprises a portion that gradually becomes thinner toward a lateral end facing the second or third edge, which is to be pressed by the pressing rod, so that a thickness thereof is the thinnest at the lateral end.

12. The method of claim 6, wherein each of the pressing rods comprises a portion that gradually becomes thinner toward an inner end facing the electrode assembly so that a thickness thereof is the thinnest at the inner end.

13. The method of claim 1, further comprising a process of cutting the collection part outside the main sealing part along the main sealing part.

14. The method of claim 12, wherein the collection part is cut in the state of pressing the pouch case.
